# EUROPEAN PATENT APPLICATION

(11) **EP 4 099 668 A2**
(43) Date of publication of application: **07.12.2022**
(21) Application number: 22195928.1
(22) Date of filing: 15.09.2022
(51) Int. Cl.: H04M 1/60, G06F 3/16

(54) **METHOD AND APPARATUS FOR PROCESSING AUDIO DATA BASED ON VEHICLE NETWORKING, AND ELECTRONIC DEVICE**

(30) Priority: 16.09.2021 CN 202111087678
(71) Applicant: Apollo Intelligent Connectivity (Beijing) Technology Co., Ltd., Beijing 100176 (CN)
(72) Inventor: HUANG, Qili, Beijing, 100176 (CN); WANG, Qing, Beijing, 100176 (CN); ZHAN, Zengyu, Beijing, 100176 (CN)
(74) Representative: Maiwald GmbH

(57) **Abstract**

Disclosed are a method and an apparatus for processing audio data based on vehicle networking, which relate to a field of artificial intelligence technologies such as voice processing, Internet of Things, Internet of Vehicles and an intelligent cabin. The electronic includes: monitoring by a first application on a terminal device, a call service of the terminal device; acquiring audio data in the terminal device in response to monitoring that the call service of the terminal device is triggered, wherein the audio data comprises a call audio generated by the call service, and other audio than the call audio; and sending the audio data to a second application on a vehicle-mounted system through a first connection. There is a second connection between the terminal device and the vehicle-mounted system. Therefore, the vehicle-mounted system in the invention may play the call data and other audio data at the same time.

## Description

### TECHNICAL FIELD

The invention relates to a field of data processing technologies, particularly to a field of artificial intelligence technologies such as voice processing, Internet of Things (IoT), Internet of Vehicles (IoV) and an intelligent cabin, and specifically to a method and an apparatus for processing audio data based on vehicle networking, and an electronic device.

### BACKGROUND

With the rapid development of vehicle networking technology, applications based on the vehicle networking are increasingly popular.

### SUMMARY

A method and an apparatus for processing audio data based on vehicle networking, an electronic device and a storage medium are according to the invention.

According to a first aspect of the invention, a method for processing audio data based on vehicle networking is provided, which is performed by a first application on a terminal device. The method includes: monitoring a call service of the terminal device; acquiring, audio data in the terminal device in response to monitoring that the call service of the terminal device is triggered, where the audio data includes a call audio generated by the call service, and other audio than the call audio; and sending the audio data to a second application on a vehicle-mounted system through a first connection, where there is a second connection between the terminal device and the vehicle-mounted system.

According to a second aspect of the invention, a method for processing audio data based on vehicle networking is provided, which is performed by a second application on a vehicle-mounted system. The method includes: receiving audio data sent by a first application on a terminal device through a first connection; determining an audio data type included in the audio data by parsing the audio data; requesting a temporary audio focus for other service audios by sending a temporary audio focus request to the vehicle-mounted system in response to the audio data including a call audio and the other service audios; and sending the call audio and the other service audios to the vehicle-mounted system, so that the vehicle-mounted system performs audio mixing on the call audio and the other service audios for play.

According to a third aspect of the invention, a method for processing audio data based on vehicle networking is provided, which is performed by a vehicle-mounted system. The method includes: receiving a temporary audio focus request sent by a second application on the vehicle-mounted system, where the temporary audio focus request includes an identifier of a target audio; allocating a temporary audio focus for the target audio corresponding to the identifier included in the temporary audio focus request; setting a bluetooth call state of a system to a bluetooth audio mixing state, where the bluetooth audio mixing state causes the vehicle-mounted system to play a call audio and the target audio simultaneously; receiving an audio play request sent by the second application, where the play request includes the call audio and the target audio corresponding to the identifier; and performing audio mixing on the call audio and the target audio for play.

According to a fourth aspect of the invention, an apparatus for processing audio data based on vehicle networking is provided. The apparatus includes: a monitoring module, configured to monitor by a first application on a terminal device, a call service of the terminal device; an acquiring module, configured to acquire audio data in the terminal device in response to monitoring that the call service of the terminal device is triggered, wherein the audio data comprises a call audio generated by the call service, and other audio than the call audio; and a sending module, configured to send the audio data to a second application on a vehicle-mounted system through a first connection. There is a second connection between the terminal device and the vehicle-mounted system.

According to a fifth aspect of the invention, an apparatus for processing audio data based on vehicle networking is provided. The method includes: a first receiving module, configured to receive audio data sent by a first application on a terminal device through a first connection; a determining module, configured to determine an audio data type included in the audio data by parsing the audio data; an application module, configured to request a temporary audio focus for other service audios by sending a temporary audio focus request to the vehicle-mounted system in response to the audio data including a call audio and the other service audios; and a sending module, configured to send the call audio and the other service audios to the vehicle-mounted system, so that the vehicle-mounted system performs mixing on the call audio and the other service audios for play.

According to a sixth aspect of the invention, an apparatus for processing audio data based on vehicle networking is provided. The method includes: a first receiving module, configured to receive a temporary audio focus request sent by a second application on a vehicle-mounted system, where the temporary audio focus request includes an identifier of a target audio; an allocation module, configured to allocate a temporary audio focus for the target audio corresponding to the identifier included in the temporary audio focus request; a state device module, configured to set a bluetooth call state of the vehicle-mounted system to a bluetooth audio mixing state, where the bluetooth audio mixing state causes the vehicle-mounted system to play a call audio and the target audio simultaneously; a second receiving module, configured to receive an audio play request sent by the second application, where the play request includes a call audio and the target audio corresponding to the identifier; and a play module, configured to perform audio mixing on the call audio and the target audio for play.

According to an eighth aspect of the invention, a non-transitory computer readable storage medium stored with computer instructions is provided. The computer instructions are executed by a computer, so that the method for processing audio data based on vehicle networking is carried out as described in the first aspect.

According to a ninth aspect of the invention, a computer program product including a computer program is provided. When the computer program is executed by a processor, steps in the method for processing audio data based on vehicle networking are carried out as described in the first aspect.

A method and an apparatus for processing audio data based on vehicle networking, an electronic device and a storage medium according to the invention have the following beneficial effects:
In the embodiment of the invention, a first application on a terminal device monitors a call service of the terminal device, acquires audio data in the terminal device in response to monitoring that the call service of the terminal device is triggered; and sends audio data to a vehicle-mounted second application through a first connection. There is a second connection between the terminal device and a vehicle-mounted system. Therefore, the first application sends audio data of the terminal device to the second application in response to monitoring that the terminal device is in the call state, so that the second application requests a temporary audio focus for other audio data, thus providing a condition for playing call data and other audio data at the same time by the vehicle-mounted system.

It should be understood that, the content described in the part is not intended to identify key or important features of embodiments of the invention, nor intended to limit the scope of the invention. Other features of the invention will be easy to understand through the following specification.

### BRIEF DESCRIPTION OF THE DRAWINGS

The drawings are intended to better understand the solution, and do not constitute a limitation to the invention.
FIG. 1 is a flowchart of a method for processing audio data based on vehicle networking according to an embodiment of the invention.
FIG. 2 is a flowchart of a method for processing audio data based on vehicle networking according to another embodiment of the invention.
FIG. 3 is a flowchart of a method for processing audio data based on vehicle networking according to yet another embodiment of the invention.
FIG. 3a is a diagram of audio data interactions based on vehicle networking according to an embodiment of the invention.
FIG. 4 is a structural diagram of an apparatus for processing audio data based on vehicle networking according to an embodiment of the invention.
FIG. 5 is a structural diagram of an apparatus for processing audio data based on vehicle networking according to another embodiment of the invention.
FIG. 6 is a structural diagram of an apparatus for processing audio data based on vehicle networking according to yet another embodiment of the invention.
FIG. 7 is a block diagram of an electronic device configured to achieve the embodiments of the invention.

### DETAILED DESCRIPTION

The exemplary embodiments of the present invention are described as below with reference to the accompanying drawings, which include various details of embodiments of the present invention to facilitate understanding, and should be considered as merely exemplary. Similarly, for clarity and conciseness, descriptions of well-known functions and structures are omitted in the following descriptions.

The embodiment of the invention relates to a field of artificial intelligence technologies such as voice processing, Internet of Things (IoT), Internet of Vehicles (IoV) and an intelligent cabin.

The Artificial Intelligence, abbreviated as AI in English, is a new science of technology that studies and develops theories, methods, technologies and application systems configured to simulate, extend and expand human intelligence.

Voice processing is a general term of various processing technologies configured to study a voice utterance/production process, statistical characteristics of voice signals, automatic voice recognition, machine synthesis, and voice perception. The voice processing is also referred to as digital voice signal processing since a modern voice processing technology is based on digital computing and implemented through a microprocessor, a signal processor, or a general purpose computer.

The IoV means that any object is connected to a network through an information sensing device based on an agreed protocol, and information exchange and communication between the objects is performed through an information transmission medium, so as to achieve functions such as intelligent recognition, positioning, tracking, supervision and the like.

The IoV in the invention may be specifically an IoV. The IoV is derived from the IoT, i.e., the IoT of vechles, which is a network connection between a vehicle and an X (e.g., a vehicle, a person, a road and a service platform) by means of a new generation information communication technology, by taking a moving vehicle as an information perception object, thus improving the overall intelligent driving level of a vehicle, providing a safe, comfortable, intelligent and efficient driving feeling and a traffic service for the user, improving the traffic operation efficiency, and enhancing the intelligence level of a social traffic service.

The intelligent cabin is provided with an intelligent/networking vehicle-mounted device or service, such as a digital meter, a large central control screen, a streaming media rearview mirror, a head-up display (HUD), an intelligent air conditioner, an intelligent atmosphere lamp, voice interaction, visual interaction and the like, so that the interactive content among "person-vehicle-road-cloud" is more rich, and each piece of system information is fully fused; and personalized definition may be achieved, so that a driver and a passenger have good experiences.

In a vehicle networking scene, when a terminal device and a vehicle-mounted system are in a bluetooth connection state, and the terminal device is in a call state, the vehicle-mounted system may play only a call audio and fail to play other audios in the terminal device. Therefore, it becomes a key research direction how the vehicle-mounted system plays other audios while playing the call audio in the terminal device.

A method and an apparatus for processing audio data based on vehicle networking and an electronic device in the embodiments of the invention are described below with reference with attached drawings.

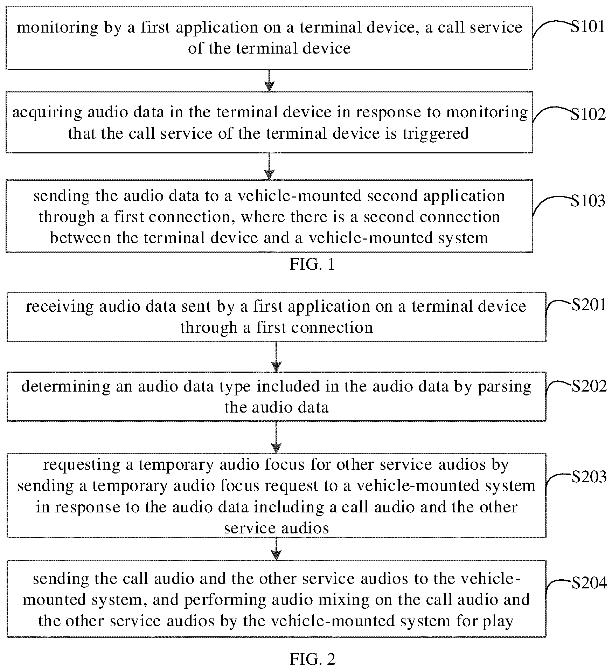

FIG. 1 is a flowchart of a method for processing audio data based on vehicle networking according to an embodiment of the invention. The method may be executed by a first application of a terminal device.

As illustrated in FIG. 1, the method for processing audio data based on vehicle networking includes the following steps at S101-S103.

At S101, a first application on a terminal device monitors a call service of the terminal device.

Optionally, the first application on the terminal device may monitor the call service of the terminal device when the first application and the vehicle-mounted second application are in a first connection state, and the terminal device and the vehicle-mounted system are in a second connection state. The second connection may be a bluetooth connection.

The terminal device may be a device with bluetooth and voice call functions. For example, the terminal device may be a mobile phone, a pad, a computer with a wireless transceiver function, which is not limited in the invention.

The first application may be any application on the terminal device that may be connected to the vehicle-mounted second application. The second application may be any application at a vehicle-mounted terminal that may be connected to the first application in the terminal device.

At S102, audio data in the terminal device is acquired in response to monitoring that the call service of the terminal device is triggered.

Optionally, the call service may be triggered by touching a call button in the terminal device; and the call service may be triggered by touching a call button in the vehicle-mounted terminal. It is not limited in the invention.

Optionally, the audio data in the terminal device may include one or more of audio data such as a call audio, a navigation audio, and a music audio, which is not limited in the invention.

At S103, the audio data is sent to a vehicle-mounted second application through a first connection. There is a second connection between the terminal device and a vehicle-mounted system.

It may be understood that, there may be a communication channel between the first application and the second application after the first connection between the first application and the second application is established. The first application may send the audio data to the second application through the communication channel.

It needs to be noted that, in the invention, when the first connection between the first application and the second application is established and the call service in the terminal device is not triggered, the audio data in the terminal device, such as the navigation audio or the music audio, may be transmitted through the second connection channel between the terminal device and the vehicle-mounted system , so that the vehicle-mounted system plays the navigation audio or the music audio. When the call service of the terminal device is triggered, the call audio is transmitted through the second connection and the vehicle-mounted system may only play the call audio in response to the vehicle-mounted system receiving the call audio sent by the second connection channel. In order to avoid the problem that the user cannot acquire a navigation audio due to only playing the call audio and thus a driving error is caused, the first application transmits the audio data through the first connection with the second application in a call service scene, so that the second application may request an audio play channel to the vehicle-mounted system in response to receiving the audio data, thus playing audios of a plurality of services at the same time.

In the embodiment of the invention, the first application on the terminal device monitors a call service of the terminal device, and acquires audio data in the terminal device in response to monitoring that the call service of the terminal device is triggered; and sends audio data to the vehicle-mounted second application through the first connection. There is a second connection between the terminal device and a vehicle-mounted system. Therefore, the first application sends the audio data of the terminal device to the second application in response to monitoring that the terminal device is in a call state, so that the second application requests a temporary audio focus for other audio data, thus providing a condition for playing call data and other audio data at the same time by the vehicle-mounted system.

FIG. 2 is a flowchart of a method for processing audio data based on vehicle networking according to another embodiment of the invention. The method may be executed by a second application of a vehicle-mounted terminal.

As illustrated in FIG. 2, the method for processing audio data based on vehicle networking includes the following steps at S201-S204.

At S201, audio data sent by a first application on a terminal device is received through a first connection.

The audio data may include one or more of audio data such as a call audio, a navigation audio, and a music audio, which is not limited in the invention.

Optionally, the second application needs to establish the first connection with the first application before receiving the audio data sent by the first application on the terminal device, which specifically includes: the second application receives a connection establishment request sent by the first application, and returns a connection establishment response to the first application to establish the first connection. Thus, it is ensured that the second application may successfully receive the audio data sent by the first application.

The first application may be any application on the terminal device that may be connected to the vehicle-mounted second application. The second application may be any application on the vehicle-mounted terminal that may be connected to the first application in the terminal device.

At S202, an audio data type included in the audio data is determined by parsing the audio data.

The audio data type may include a call audio and other service audios. The other service audios are other audios in the terminal device rather than the call audio, for example, a navigation audio, a music audio, which are not limited in the invention.

Optionally, a hidden Markov model (HMM) may be adopted to determine the audio data type included in the audio data by parsing the audio data.

Alternatively, a pre-trained neutral network may be adopted to determine the audio data type included in the audio data by parsing the audio data.

At S203, a temporary audio focus is requested for other service audios by sending a temporary audio focus request to a vehicle-mounted system in response to the audio data including a call audio and the other service audios.

It may be understood that, the vehicle-mounted system may play the call audio first in response to the audio data including the call audio, and may play other service audios while playing the call audio only when the temporary audio focus for the other service audios has been requested.

Optionally, the temporary audio focus may be requested for the other service audiosbased on the priorities of other service audios in response to the other service audios including at least two types of audio data.

For example, other service audios include a navigation audio and a music audio, and a temporary audio focus for the navigation audio may be first requested, to ensure that the user may hear the navigation audio in a call process, which avoids that the user misses important navigation information due to answering calls, guarantees the user security and improves the user experience.

At S204, the call audio and the other service audios are sent to the vehicle-mounted system, and the vehicle-mounted system performs audio mixing on the call audio and the other service audios for play.

It may be understood that, the second application may send the call audio and other service audios to the vehicle-mounted system when the requested temporary audio focus is approval.

In the embodiment of the invention, the second application receives audio data sent by the first application on the terminal device through the first connection first, and then determines the audio data type included in the audio data by parsing the audio data, and requests the temporary audio focus for other service audios by sending the temporary audio focus request to the vehicle-mounted system in response to the audio data including the call audio and the other service audios, and sends the call audio and the other service audios to the vehicle-mounted system, and the vehicle-mounted system performs audio mixing on the call audio and the other service audios for play. Therefore, the second application requests the temporary audio focus for other service audios in response to the audio data including other service audios, and the vehicle-mounted system may perform audio mixing on the other service audios and the call audio for play, thus playing other service audios while playing the call audio, which avoids that the user misses important information in other service audios in a call process, and improves the user experience.

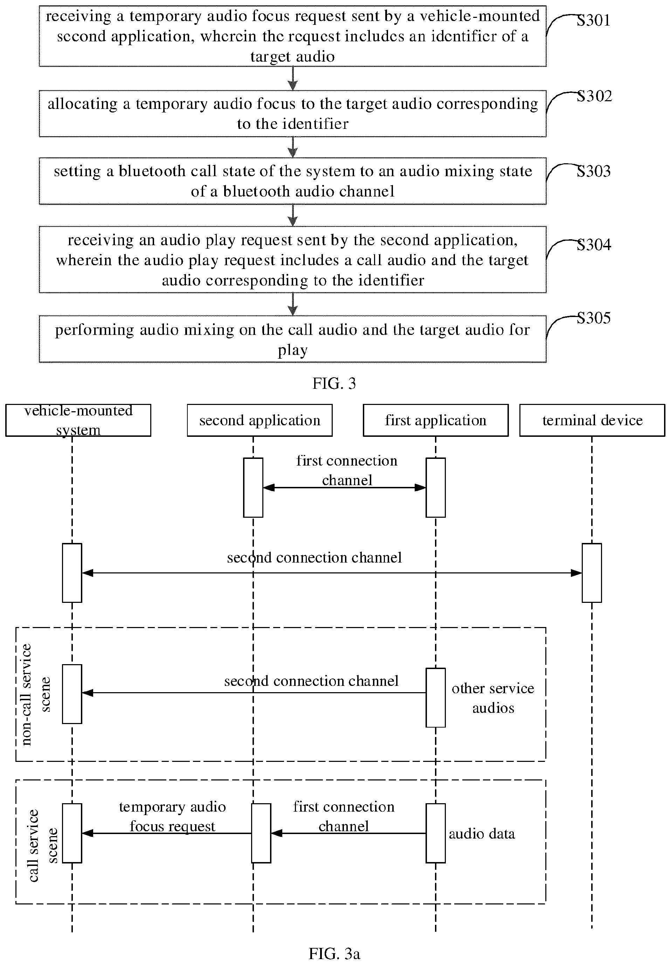

FIG. 3 is a flowchart of a method for processing audio data based on vehicle networking according to yet another embodiment of the invention. The method may be executed by a vehicle-mounted system.

As illustrated in FIG. 3, the method for processing audio data based on vehicle networking includes the following steps at S301-S305.

At S301, a temporary audio focus request sent by a vehicle-mounted second application is received, where the request includes an identifier of a target audio.

The identifier of the target audio may be an identifier corresponding to an audio needing to request a temporary audio focus in other service audios. The identifier of the target audio may be one or more, which is not limited in the invention.

It should be noted that, different identifiers correspond to different service audios. For example, the identifier of a navigation audio may be 1, and the identifier of a music audio may be 2, which is not limited in the invention.

At S302, a temporary audio focus is allocated for the target audio corresponding to the identifier.

It may be understood that, the vehicle-mounted system may determine a type of a target audio based on the identifier of the target audio in response to receiving the temporary audio focus request, and allocate a temporary audio focus for the target audio.

At S303, a bluetooth call state of the system is set to an audio mixing state of a bluetooth audio channel.

The audio mixing state of the bluetooth audio channel may be used to play a mixed audio having a call audio and other service audios.

It may be understood that, the vehicle-mounted system may only play the call audio in the bluetooth call state, and may not play the other service audios while playing the call audio. Therefore, the bluetooth call state needs to be set to an audio mixing state of a bluetooth audio channel, so that the vehicle-mounted system may perform audio mixing on the call audio and the other service audios for play.

At S304, an audio play request sent by the second application is received, where the audio play request includes a call audio and the target audio corresponding to the identifier.

It may be understood that, the second application may send an audio play request for playing both the call audio and the target audio to the vehicle-mounted system in response to acquiring the temporary audio focus allocated by the vehicle-mounted system for the target audio, and the vehicle-mounted system may play the call audio and the target audio at the same time.

At S305, audio mixing is performed on the call audio and the target audio for play.

Optionally, the vehicle-mounted system may play the target audio through a preset object interface for audio play in response to receiving the target audio. The preset object interface for audio play may reduce the sound of the target audio.

Optionally, the vehicle-mounted system may perform audio mixing on the call audio and the target audio by using an adaptive weighted audio mixing algorithm or a method for averaging after linear superposition, before performing audio mixing on the call audio and the target audio for play, which is not limited in the invention.

For example, the target audio acquiring a temporary audio focus is a navigation audio, and the vehicle-mounted system may perform audio mixing on the call audio and the navigation audio for play, after reducing the volume of the navigation audio, so that the user may hear the navigation audio in a call process, and the call quality may not be affected by the large volume of the navigation audio.

It should be noted that the above examples are only illustrative and may not be a limitation of a target audio in the embodiment of the invention.

In the embodiment of the invention, the vehicle-mounted system allocates the temporary audio focus for the target audio corresponding to the identifier of the target audio in response to receiving the temporary audio focus request sent by the vehicle-mounted second application, and sets the bluetooth call state of the system to the audio mixing state of the bluetooth audio channel, and receives the audio play request sent by the second application, and performs audio mixing on the call audio and the target audio for play. Therefore, the vehicle-mounted system performs audio mixing on the other service audios and the call audio for play by allocating the temporary audio focus for the target audio, thus playing other service audios while playing the call audio, which avoids that the user misses important information in other service audios in a call process, and improves the user experience.

FIG. 3a is a diagram of audio data interactions based on vehicle networking according to an embodiment of the invention.

As illustrated in FIG. 3a, the first application on the terminal device and the vehicle-mounted second application are in a first connection state, and the terminal device and the vehicle-mounted system are in a second connection state.

In a non-call service scene, a call service in the terminal device is not triggered, and the audio data played by the terminal device only includes a navigation audio, a music audio and other service audios, and does not include a call audio. In this case, the other service audios may be transmitted to the vehicle-mounted system through a second connection channel, and the other service audios such as the navigation audio or the music audio may be played by the vehicle-mounted system.

In a call service scene, the first application acquires the audio data in the terminal device in response to monitoring that the call service of the terminal device is triggered; and transmits the audio data to the second application on a vehicle-mounted terminal through the first connection channel. The second application requests a temporary audio focus for other service audios by sending a temporary audio focus request to the vehicle-mounted system, and transmits the call audio and other service audios to the vehicle-mounted terminal in response to determining that the received audio data includes the call audio and the other service audios. The vehicle-mounted system allocates a temporary audio focus for a target audio corresponding to the identifier of the target audio in response to receiving the temporary audio focus request, and sets a bluetooth call state of a system to an audio mixing state of a bluetooth audio channel, and performs audio mixing on the call audio and the target audio for play.

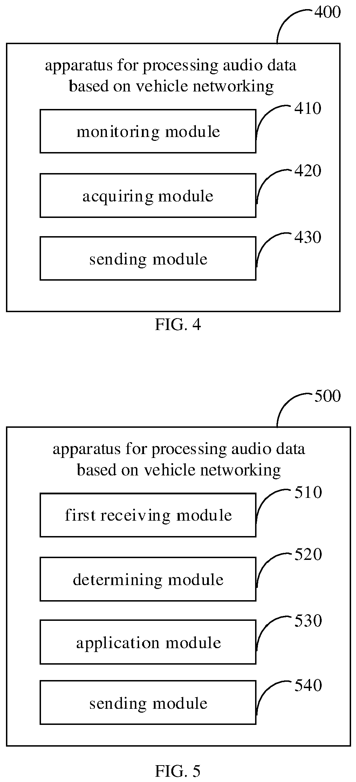

FIG. 4 is a diagram of a structure of an apparatus for processing audio data based on vehicle networking according to an embodiment of the invention.

As illustrated in FIG. 4, the apparatus 400 for processing audio data based on vehicle networking includes: a monitoring module 410, an acquiring module 420 and a sending module 430.

The monitoring module 410 is configured to monitor by a first application on a terminal device, a call service of the terminal device.

The acquiring module 420 is configured to acquire audio data in the terminal device in response to monitoring that the call service of the terminal device is triggered.

The sending module 430 is configured to send the audio data to a vehicle-mounted second application through a first connection. There is a second connection between the terminal device and a vehicle-mounted system.

Optionally, the second connection is a bluetooth connection.

It should be noted that the foregoing explanation of the method for processing audio data based on vehicle networking is also applied to an apparatus for processing audio data based on vehicle networking in the embodiment, which will not be repeated here.

In the apparatus in the embodiment of the invention, the first application on the terminal device monitors a call service of the terminal device, and acquires audio data in the terminal device in response to monitoring that the call service of the terminal device is triggered; and sends audio data to the vehicle-mounted second application through the first connection. There is a second connection between the terminal device and a vehicle-mounted system. Therefore, the first application sends the audio data of the terminal device to the second application in response to monitoring that the terminal device is in a call state, so that the second application requests a temporary audio focus for other audio data, thus providing a condition for playing call data and other audio data at the same time by the vehicle-mounted system.

FIG. 5 is a diagram of a structure of an apparatus for processing audio data based on vehicle networking according to an embodiment of the invention.

As illustrated in FIG. 5, the apparatus 500 for processing audio data based on vehicle networking includes: a first receiving module 510, a determining module 520, an application module 530 and a sending module 540.

The first receiving module 510 is configured to receive audio data sent by a first application on a terminal device through a first connection; the determining module 520 is configured to determine an audio data type included in the audio data by parsing the audio data; the application module 530 is configured to request a temporary audio focus for other service audios by sending a temporary audio focus request to a vehicle-mounted system in response to the audio data including a call audio and the other service audios; and the sending module 540 is configured to send the call audio and the other service audios to the vehicle-mounted system, and perform audio mixing on the call audio and the other service audios by the vehicle-mounted system for play.

Optionally, the apparatus further includes a second receiving module and an establishment connection module.

The second receiving module is configured to receive a connection establishment request sent by the first application; and the establishment connection module is configured to establish the first connection by returning a connection establishment response to the first application.

It should be noted that the foregoing explanation of the method for processing audio data based on vehicle networking is also applied to an apparatus for processing audio data based on vehicle networking in the embodiment, which will not be repeated here.

In the apparatus in the embodiment of the invention, the second application receives audio data sent by the first application on the terminal device through the first connection first, and then determines the audio data type included in the audio data by parsing the audio data, and requests the temporary audio focus for other service audios by sending the temporary audio focus request to the vehicle-mounted system in response to the audio data including the call audio and the other service audios, and then sends the call audio and the other service audios to the vehicle-mounted system, and the vehicle-mounted system performs audio mixing on the call audio and the other service audios for play. Therefore, the second application requests the temporary audio focus for other service audios in response to the audio data including other service audios, and the vehicle-mounted system may perform audio mixing on the other service audios and the call audio for play, thus playing other service audios while playing the call audio, which avoids that the user misses important information in other service audios in a call process, and improves the user experience.

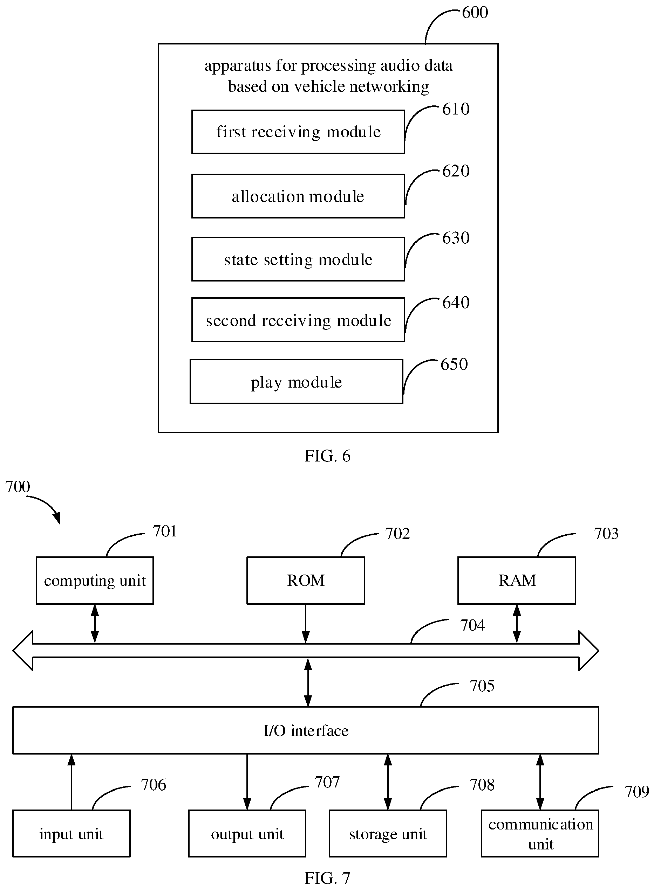

FIG. 6 is a diagram of a structure of an apparatus for processing audio data based on vehicle networking according to an embodiment of the invention.

As illustrated in FIG. 6, the apparatus 600 for processing audio data based on vehicle networking includes: a first receiving module 610, an allocation module 620, a state setting module 630, a second receiving module 640 and a play module 650.

The first receiving module 610 is configured to receive a temporary audio focus request sent by a vehicle-mounted second application, the request includes an identifier of a target audio; the allocation module 620 is configured to allocate a temporary audio focus for the target audio corresponding to the identifier; the state setting module 630 is configured to set a bluetooth call state of the system to an audio mixing state of a bluetooth audio channel; the second receiving module 640 is configured to receive an audio play request sent by the second application, the play request includes a call audio and the target audio corresponding to the identifier; and the play module 650 is configured to perform audio mixing on the call audio and the target audio for play.

Optionally, the play module 650 is further configured to: play the target audio through a preset object interface for audio play.

It should be noted that the foregoing explanation of the method for processing audio data based on vehicle networking is also applied to an apparatus for processing audio data based on vehicle networking in the embodiment, which will not be repeated here.

In the apparatus in the embodiment of the invention, the vehicle-mounted system allocates the temporary audio focus for the target audio corresponding to the identifier of the target audio in response to receiving the temporary audio focus request sent by the vehicle-mounted second application, and sets the bluetooth call state of the system to the audio mixing state of the bluetooth audio channel, and receives the audio play request sent by the second application and performs audio mixing on the call audio and the target audio for play. Therefore, the vehicle-mounted system performs audio mixing on the other service audios and the call audio for play by allocating the temporary audio focus for the target audio, thus playing other service audios while playing a call audio, which avoids that the user misses important information in other service audios in a call process, and improves the user experience.

According to the embodiment of the invention, an electronic device, a readable storage medium and a computer program product are further according to the invention.

FIG. 7 illustrates a schematic block diagram of an example electronic device 700 configured to implement the embodiment of the invention. The electronic device is intended to represent various types of digital computers, such as laptop computers, desktop computers, workstations, personal digital assistants, servers, blade servers, mainframe computers, and other suitable computers. The electronic device may also represent various types of mobile devices, such as personal digital assistants, cellular phones, smart phones, wearable devices, and other similar computing devices. The components shown herein, their connections and relations, and their functions are merely examples, and are not intended to limit the implementation of the invention described and/or required herein.

As illustrated in FIG. 7, the device 700 includes a computing unit 701, configured to execute various appropriate actions and processes according to a computer program stored in a read-only memory (ROM) 702 or loaded from a storage unit 708 to a random access memory (RAM) 703. In the RAM 703, various programs and data required by an operation of the device 700 may be further stored. The computing unit 701, the ROM 702 and the RAM 703 may be connected with each other by a bus 704. An input/output (I/O) interface 705 is also connected to the bus 704.

The plurality of components in the device 700 are connected to the I/O interface 705, and includes: an input unit 706, for example, a keyboard, a mouse, etc.; an output unit 707, for example various types of displays, speakers; the storage unit 708, for example a magnetic disk, an optical disk; and a communication unit 709, for example, a network card, a modem, a wireless transceiver. The communication unit 709 allows the device 700 to exchange information/data through a computer network such as internet and/or various types of telecommunication networks and other devices.

The computing unit 701 may be various types of general and/or dedicated processing components with processing and computing ability. Some examples of the computing unit 701 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 701 executes various methods and processings as described above, for example, a method for processing audio data based on vehicle networking. For example, in some embodiments, the method for processing audio data based on vehicle networking may be further achieved as a computer software program, which is physically contained in a machine readable medium, such as a storage unit 708. In some embodiments, a part or all of the computer program may be loaded and/or installed on the device 700 via the ROM 702 and/or the communication unit 709. When the computer program is loaded on the RAM 703 and executed by the computing unit 701, one or more blocks in the method for processing audio data based on vehicle networking as described above may be performed. Alternatively, in other embodiments, a computing unit 701 may be configured to perform a method for processing audio data based on vehicle networking in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer codes configured to execute the method in the present invention may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. The computer codes may be performed completely or partly on the machine, performed partly on the machine as an independent software package and performed partly or completely on the remote machine or server.

In the context of the invention, a machine-readable medium may be a tangible medium that may contain or store a program intended for use in or in conjunction with an instruction execution system, apparatus, or device. The machine readable medium may be a machine readable signal medium or a machine readable storage medium. The machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display device for displaying information to the user (for example, a CRT (cathode ray tube) or a LCD (liquid crystal display) monitor); and a keyboard and a pointing device (for example, a mouse or a trackball) through which the user may provide input to the computer. Other types of devices may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system (for example, as a data server) including back-end components, or a computing system (for example, an application server) including middleware components, or a computing system (for example, a user computer with a graphical user interface or a web browser through which the user may interact with the implementation mode of the system and technology described herein) including front-end components, or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and the Internet.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, and further may be a server of a distributed system, or a server in combination with a blockchain.

In the embodiment, the call service of the terminal device is monitored in response to the first application on the terminal device and the vehicle-mounted second application being in a connection state, and the terminal device and the vehicle-mounted system being in a bluetooth connection state; the audio data in the terminal device is acquired in response to monitoring that the call service of the terminal device is triggered; and the audio data is sent to the second application through a connection with the second application. Therefore, the first application sends the audio data of the terminal device to the second application in response to monitoring that the terminal device is in a call state, so that the second application requests the temporary audio focus for other audio data, thus providing a condition for playing call data and other audio data at the same time by the vehicle-mounted system.

It should be understood that, various forms of procedures shown above may be configured to reorder, add or delete blocks. For example, steps described in the invention may be executed in parallel, sequentially, or in different orders, as long as the desired result of the technical solution disclosed in the present invention may be achieved, which will not be limited herein.

## Claims

1. A method for processing audio data based on vehicle networking, performed by a first application on a terminal device, comprising:
monitoring (S101) a call service of the terminal device;
acquiring (S102) audio data in the terminal device in response to monitoring that the call service of the terminal device is triggered, wherein the audio data comprises a call audio generated by the call service, and other audio than the call audio; and
sending (S103) the audio data to a second application on a vehicle-mounted system through a first connection, wherein there is a second connection between the terminal device and the vehicle-mounted system.

2. The method of claim 1, wherein the second connection is a bluetooth connection.

3. The method of claim 1 or 2, further comprising:
in response to monitoring that the call service of the terminal device is not triggered, sending the other audio to the vehicle-mounted system through the second connection.

4. A method for processing audio data based on vehicle networking, performed by a second application on a vehicle-mounted system, comprising:
receiving (S201) audio data sent by a first application on a terminal device through a first connection;
determining (S202) an audio data type comprised in the audio data by parsing the audio data;
requesting (S203) a temporary audio focus for other service audios by sending a temporary audio focus request to the vehicle-mounted system, in response to the audio data comprising a call audio and the other service audios; and
sending (S204) the call audio and the other service audios to the vehicle-mounted system, so that the vehicle-mounted system performs audio mixing on the call audio and the other service audios for play.

5. The method of claim 4, further comprising:
receiving a connection establishment request sent by the first application; and
establishing the first connection with the first application, by returning a connection establishment response to the first application.

6. The method of claim 4 or 5, wherein determining the audio data type comprised in the audio data comprises:
determining the audio data type by parsing the audio data with one of a hidden Markov model and a pre-trained neutral network.

7. The method of any one of claims 4 to 6, wherein requesting the temporary audio focus for other service audios comprises:
in response to the other service audios including at least two audio data types, requesting the temporary audio focus for other service audios based on the priorities of other service audios.

8. A method for processing audio data based on vehicle networking, performed by a vehicle-mounted system, comprising:
receiving (S301) a temporary audio focus request sent by a second application on the vehicle-mounted system, wherein the temporary audio focus request comprises an identifier of a target audio;
allocating (S302) a temporary audio focus for the target audio corresponding to the identifier comprised in the temporary audio focus request;
setting (S303) a bluetooth call state of the vehicle-mounted system to a bluetooth audio mixing state, wherein the bluetooth audio mixing state causes the vehicle-mounted system to play a call audio and the target audio simultaneously;
receiving (S304) an audio play request sent by the second application, wherein the play request comprises the call audio and the target audio corresponding to the identifier; and
performing (S305) audio mixing on the call audio and the target audio for play.

9. The method of claim 8, wherein performing audio mixing on the call audio and the target audio for play, comprises:
playing the target audio through a preset object interface for audio play, wherein the preset object interface is configured to reduce a volume of the target audio.

10. The method of claim 8 or 9, wherein performing audio mixing on the call audio and the target audio for simultaneous play, comprises:
performing audio mixing on the call audio and the target audio by using an adaptive weighted audio mixing algorithm or by averaging after linear superposition.

11. An apparatus (400) for processing audio data based on vehicle networking, comprising:
a monitoring module (410), configured to monitor by a first application on a terminal device, a call service of the terminal device;
an acquiring module (420), configured to acquire audio data in the terminal device in response to monitoring that the call service of the terminal device is triggered, wherein the audio data comprises a call audio generated by the call service, and other audio than the call audio; and
a sending module (430), configured to send the audio data to a second application on a vehicle-mounted system through a first connection, wherein there is a second connection between the terminal device and the vehicle-mounted system.

12. An apparatus (500) for processing audio data based on vehicle networking, comprising:
a first receiving module (510), configured to receive audio data sent by a first application on a terminal device through a first connection;
a determining module (520), configured to determine an audio data type comprised in the audio data by parsing the audio data;
an application module (530), configured to request a temporary audio focus for other service audios by sending a temporary audio focus request to the vehicle-mounted system, in response to the audio data comprising a call audio and the other service audios; and
a sending module (540), configured to send the call audio and the other service audios to the vehicle-mounted system, so that the vehicle-mounted system performs audio mixing on the call audio and the other service audios for play.

13. An apparatus (600) for processing audio data based on vehicle networking, comprising:
a first receiving module (610), configured to receive a temporary audio focus request sent by a second application on a vehicle-mounted system, wherein the temporary audio focus request comprises an identifier of a target audio;
an allocation module (620), configured to allocate a temporary audio focus for the target audio corresponding to the identifier comprised in the temporary audio focus request;
a state setting module (630), configured to set a bluetooth call state of the vehicle-mounted system to a bluetooth audio mixing state, wherein the bluetooth audio mixing state causes the vehicle-mounted system to play a call audio and the target audio simultaneously;
a second receiving module (640), configured to receive an audio play request sent by the second application, wherein the play request comprises a call audio and the target audio corresponding to the identifier; and
a play module (650), configured to perform audio mixing on the call audio and the target audio for play.

14. A non-transitory computer readable storage medium stored with computer instructions, wherein the computer instructions are configured to cause a computer to perform the method of any one of claims 1 to 6.

15. A computer program product comprising a computer program, wherein when the computer program is performed by a processor, the method of any one of claims 1 to 6 is implemented.
